# EUROPÄISCHE PATENTSCHRIFT

(11) **EP 3 060 772 B1**
(45) Veröffentlichungstag und Bekanntmachung des Hinweises auf die Patenterteilung: **28.03.2018**
(21) Anmeldenummer: 14786194.2
(22) Anmeldetag: 17.10.2014
(51) Int. Cl.: F01N 11/00

(54) **VERFAHREN UND VORRICHTUNG ZUR ÜBERWACHUNG EINES PARTIKELFILTERS**
METHOD AND DEVICE FOR MONITORING A PARTICLE FILTER
PROCÉDÉ ET DISPOSITIF DE SURVEILLANCE D'UN FILTRE À PARTICULES

(30) Priorität: 24.10.2013 DE 102013221598
(43) Veröffentlichungstag der Anmeldung: 31.08.2016
(73) Patentinhaber: Robert Bosch GmbH, 70442 Stuttgart (DE)
(72) Erfinder: WILLIMOWSKI, Markus, 71691 Freiberg (DE); BAARS, Enno, 71229 Leonberg (DE); HANDLER, Torsten, 70435 Stuttgart (DE); WINKLER, Klaus, 71277 Rutesheim (DE); ZEIN, Thomas, 71069 Sindelfingen (DE)
(86) Internationale Anmeldenummer: PCT/EP2014/072368
(87) Internationale Veröffentlichungsnummer: WO 2015/059060

(56) Entgegenhaltungen:
- WO-A1-2013/042189
- DE-A1-102007 000 342
- US-A1- 2008 041 035
- US-A1- 2009 012 694
- US-A1- 2009 107 114

## Beschreibung

### Stand der Technik

Die Erfindung betrifft ein Verfahren zur Überwachung eines Partikelfilters im Abgaskanal einer mit Benzin betriebenen Brennkraftmaschine.

Die Erfindung betrifft weiterhin eine Vorrichtung zur Überwachung eines Partikelfilters in einem Abgaskanal einer mit Benzin betriebenen Brennkraftmaschine, wobei der Brennkraftmaschine eine Steuereinheit zugeordnet ist.

Ein Partikelfilter im Abgaskanal einer mit Benzin betriebenen Brennkraftmaschine dient der Verminderung der von der Brennkraftmaschine abgegebenen Partikel. Wie auch bei einem Partikelfilter für eine mit Dieselkraftstoff betriebene Brennkraftmaschine muss bei der mit Benzin betriebenen Brennkraftmaschine der Partikelfilter bei Bedarf durch Abbrand der Partikel regeneriert werden. Diese Regeneration muss überwacht werden. Weiterhin sehen Vorschriften vor, dass die korrekte Funktion und das Vorhandensein des Partikelfilters mittels Diagnosefunktionen während des Betriebs überwacht werden. Die Überwachung von Partikelfiltern für Dieselmotore erfolgt über eine Bestimmung der Druckdifferenz vor und nach dem Partikelfilter sowie über dem Partikelfilter im Abgaskanal nachgeschaltete Partikelsensoren.

Die DE112008003421T5 beschreibt ein Verfahren zum Regenerieren eines Partikelfilters, umfassend:
- Vorsehen eines Oxidationskatalysators stromabwärts eines Verbrennungsmotors und stromaufwärts des Partikelfilters,
- Vorsehen eines ersten Sauerstoffsensors stromaufwärts des Oxidationskatalysators;
- Vorsehen eines zweiten Sauerstoffsensors stromabwärts des Oxidationskatalysators; Vorsehen eines Prozessors zum Wählen und Aufrechterhalten einer erwünschten Änderung der Sauerstoffkonzentration über dem Oxidationskatalysator einen ausgewählten Zeitraum lang, um einen aus dem Oxidationskatalysator austretenden Abgasstrom vorzusehen, der eine Solltemperatur aufweist, und optionale Temperaturerfassung, um einen zusätzlichen Regelkreis vorzusehen;
- Regenerieren des Partikelfilters durch Leiten des aus dem Oxidationskatalysator austretenden Abgasstroms durch den Partikelfilter, wobei die Temperatur des durch den Partikelfilter tretenden Abgasstroms und der gewählte Zeitraum ausreichend sind, um den Partikelfilter zu regenerieren.

Die DE102010046747A1 beschreibt ein Verfahren zum Ausführen einer Regeneration eines Partikelfilters eines Fremdzündungsmotors mit einer Abgasanlage, die den Partikelfilter, eine stromaufwärts des Partikelfilters positionierte Schadstoffbegrenzungsvorrichtung, einen dafür ausgelegten Temperatursensor, eine Temperatur des Partikelfilters aufweist, und einen stromabwärts des Partikelfilters positionierten stromabwärts befindlichen Sauerstoffsensor umfasst. Erfindungsgemäß ist vorgesehen, während Regeneration des Partikelfilters das Anheben einer Temperatur des Partikelfilters; als Reaktion darauf, dass die Temperatur des Partikelfilters größer als ein Temperaturschwellenwert ist und dass eine Zeit, die ein Lambda des stromabwärts befindlichen Sauerstoffsensor fett vorbelastet ist, größer als ein Zeitschwellenwert ist, das Einleiten sekundärer Luft zu einer Stelle stromabwärts der Schadstoffbegrenzungsvorrichtung und stromaufwärts des Partikelfilters; und als Reaktion darauf, dass die Temperatur des Partikelfilters größer als der Temperaturschwellenwert ist und dass die Zeit, die das Lambda des stromabwärts befindlichen Sauerstoffsensors fett vorbelastet ist, nicht größer als der Zeitschwellenwert ist, das Setzen einer Partikelfilter-Degradationsbedingung.

Durch Überwachen des Luft/Kraftstoff-Verhältnisses stromabwärts des Partikelfilters auf Änderungen von Pendelungen des Luft/Kraftstoff-Verhältnisses des Abgases können geeignete Bedingungen für eine Partikelfilterregeneration festgestellt werden. Insbesondere zeigt eine Verminderung der Pendelungen eine Oxidation von Ruß in dem Partikelfilter an. Zeigt eine vermehrte Pendelung des Luft/Kraftstoff-Verhältnisses des Abgases nach dem Partikelfilters an, dass die Rußbeladung oxidiert wurde, kann die Regeneration beendet werden. In dem beanspruchten Verfahren werden Lambdasensoren benötigt. Es wird in dieser Ausführung kein dem Partikelfilter nachgeschalteter Temperatursensor verwendet.

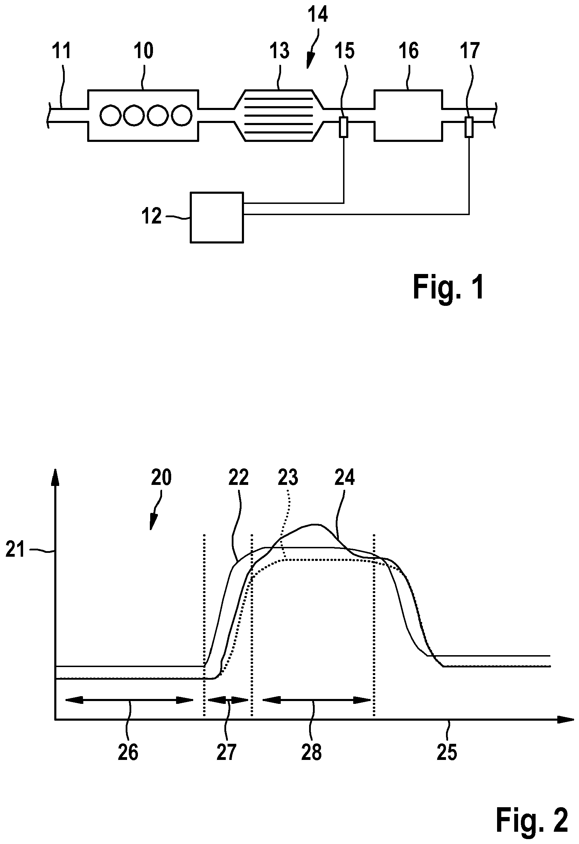

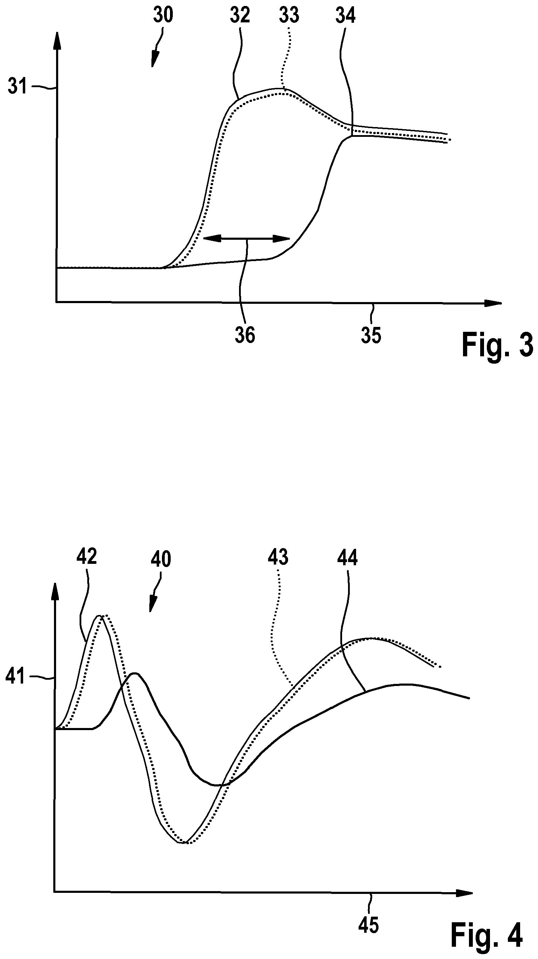

Die DE102012207717A1 beschreibt ein Verfahren zur Regeneration eines Filters, der Abgas eines Motors filtert, wobei das Verfahren umfasst:
- Bestimmen einer Rußansammlung in dem Filter;
- Vergleichen der Rußansammlung mit einer ersten Rußansammlungsschwelle;
- und selektives Erhöhen von Oxidationsniveaus in dem Abgas in ansprechen auf den Vergleich zwischen der Rußansammlung und der ersten Rußansammlungsschwelle, um eine Regeneration in dem Filter auszulösen. Die in Figur 1 hierzu gezeigte Anordnung umfasst einen dem Partikelfilter nachgeschalteten Temperatursensor 180-3. In der Beschreibung des Verfahrens gemäß Figur 3 wird jedoch lediglich nach der Partikelmenge gesteuert, nicht jedoch nach der Temperatur am Temperatursensor 180-3. Temperaturen werden lediglich bestimmt, um eine für den Start der Regeneration geeignete Temperatur sicherzustellen.

In der DE10358195A1 wird ein Verfahren zur Überwachung eines in einem Abgasbereich einer Brennkraftmaschine angeordneten Bauteils vorgeschlagen, bei dem das Tiefpassverhalten, welches durch die Wärmekapazität des Bauteils bestimmt ist, überprüft wird durch eine Bewertung eines Maßes einer ersten Abgastemperatur (TvK), die vor dem zu überwachenden Bauteil auftritt, und einer zweiten Abgastemperatur (TnK), die von einem zweiten Temperatursensor (TH) nach dem zu überwachenden Bauteil erfasst wird. Das erfindungsgemäße Verfahren ermöglicht eine Überwachung des Bauteils auf eine Veränderung, die beispielsweise bei einer unzulässigen Manipulation aufgetreten sein kann. Im Extremfall kann das zu überwachende Bauteil, beispielsweise ein Katalysator und/oder ein Partikelfilter, vollständig entfernt worden sein. Die Schrift lehrt, aus dem aus der Wärmekapazität eines Bauteils in einem Abgaskanal resultierenden Verhaltens der Temperatur des das Bauteil durchströmenden Abgases auf eine Manipulation an dem Bauteil zu schließen. Ein Partikelfilter ist jedoch nicht konkret benannt.

Die DE102009003091A1 überwacht das Vorhandensein einer Sensoreinheit, indem mit der Sensoreinheit eine Sensortemperatur direkt oder indirekt bestimmt und aus einem Vergleich der direkt oder indirekt bestimmten Sensortemperatur mit einer mittels einer weiteren Sensoreinheit bestimmten Abgastemperatur und/oder mit Modellgrößen und/oder mit definierten Schwellwerten eine Erkennung auf Ausbau und/oder nicht funktionsgerechten Einbau der Sensoreinheit geschlossen wird. Es ist nicht vorgesehen, einen Partikelfilter zu überwachen, indem die durch die exotherme Reaktion erfolgende Temperaturerhöhung als Kriterium verwendet wird.

In der DE102010002691A1 wird ein Partikelfilter über eine Differenzdruckmessung diagnostiziert, eine Bewertung von Temperaturen vor und nach dem Partikelfilter ist nicht vorgesehen.

In der DE 4426020A1 ist ein Verfahren beschrieben, bei dem die Funktionsfähigkeit eines in einem Abgasbereich einer Brennkraftmaschine angeordneten Katalysators überwacht wird. Die Überwachung wird anhand der durch eine exotherme Umsetzung der Abgase im Katalysator erzeugten Temperaturerhöhung vorgenommen. Ermittelt werden zwei Temperatursignale, wobei das erste Temperatursignal auf einer Messung der Temperatur nach dem Katalysator beruht und das zweite Temperatursignal mithilfe eines Modells berechnet wird. Die Schrift lehrt, bei einem Katalysator, nicht jedoch bei einem Partikelfilter, aus der bei der bestimmungsgemäßen Funktion exothermen Reaktion des Bauteils, und der somit vom Bauteil erzeugten Erhöhung der Abgastemperatur, auf eine korrekte Funktion des Bauteils zu schließen. Eine Diagnose eines ausgebauten Bauteils wird nicht erwähnt.

Aus der US 2009/0012694 A1 ist ein Steuermodul bekannt, welches eine Thermomodul-Erkennung und ein Schutzmodul umfasst. Das thermische Detektionsmodul empfängt Temperaturdaten eines Partikelfilters und bestimmt eine Temperatur, basierend auf den Temperaturdaten. Das Schutzmodul reduziert selektiv die Ausgangsleistung eines Motors, wenn die Temperatur größer als eine Temperaturschwelle ist. Weiterhin wird ein Verfahren offenbart, welches das Empfangen von Temperaturwerten eines Partikelfilters und ein selektives Reduzieren der Ausgangsleistung eines Motors umfasst, wenn eine Temperatur auf der Basis der Temperaturdaten größer ist als eine Temperaturschwelle.

Es ist daher Aufgabe der Erfindung, ein Verfahren zur Überwachung eines Partikelfilters, insbesondere gegen dessen Ausbau, für eine mit Benzin betriebene Brennkraftmaschine bereitzustellen.

Es ist weiterhin Aufgabe der Erfindung, eine Vorrichtung zur Durchführung des Verfahrens bereitzustellen.

### Offenbarung der Erfindung

Die das Verfahren betreffende Aufgabe der Erfindung wird dadurch gelöst, dass eine erste Abgastemperatur vor dem Partikelfilter und eine zweite Abgastemperatur nach dem Partikelfilter bestimmt werden und dass aus einer Differenz zwischen der ersten und der zweiten Abgastemperatur oder aus einem unterschiedlichen zeitlichen Verlauf der ersten und der zweiten Abgastemperatur auf ein Vorhandensein und/oder eine korrekte Funktion des Partikelfilters geschlossen wird. Das Verfahren beruht auf einer Detektion der Auswirkungen der thermischen Masse des Partikelfilters oder dessen Einfluss auf die Temperatur des Abgases beim Abbrand von im Partikelfilter angelagerten Rußpartikeln. Hierdurch zeigen die Temperaturverläufe vor und nach dem Partikelfilter charakteristische Unterschiede. Treten diese nicht auf, wurde der Partikelfilter entfernt und beispielhaft durch ein Rohrstück ersetzt, dessen thermische Masse wesentlich geringer ist als die des Partikelfilters.

In einer Ausführung des Verfahrens ist vorgesehen, dass die erste Abgastemperatur aus Betriebsparametern der Brennkraftmaschine modelliert wird und dass die zweite Abgastemperatur mit einem zweiten Temperatursensor oder einem Abgassensor mit Temperaturfunktion bestimmt wird. Wird die erste Abgastemperatur vor dem Partikelfilter aus Betriebsparametern der Brennkraftmaschine modelliert, kann ein erster Temperatursensor an dieser Stelle entfallen. Die Lösung ist somit kostengünstig. Die zweite Abgastemperatur nach dem Partikelfilter muss dagegen mit einem zweiten Temperatursensor bestimmt werden um die vom Zustand des Partikelfilters abhängigen Temperaturverläufe zu detektieren und in die Überwachung einfließen zu lassen.

Bestimmungsgemäß werden bei einer Regeneration des Partikelfilters Rußpartikel mit Sauerstoff aus dem Abgas verbrannt. Die im Partikelfilter abgelagerte Rußmenge kann über ein Modell aufgrund von Betriebsparametern abgeschätzt werden oder mit einem vor dem Partikelfilter angebrachten Partikelsensor bestimmt werden. Zum Start der Regeneration wird mageres Abgas mit ausreichend hoher Temperatur in den Partikelfilter eingeleitet. Die Regeneration ist eine exotherme Reaktion und heizt daher das Abgas zusätzlich auf. Aus der im Partikelfilter abgelagerten Rußmenge kann die frei werdenden Wärmemenge und so die Temperaturerhöhung bestimmt werden. Die geeignete Temperatur und Abgaszusammensetzung vor dem Partikelfilter hängen davon ab, ob ein unbeschichteter Partikelfilter oder einer mit katalytisch wirksamer Beschichtung verwendet wird. Erfindungsgemäß ist daher vorgesehen, dass während einer Regeneration des Partikelfilters auf einen korrekt eingebauten und/oder funktionierenden Partikelfilter geschlossen wird, wenn die erste Abgastemperatur in einem vorgebbaren Zeitabschnitt niedriger ist als die zweite Abgastemperatur ist.

Hierbei ist der vorgebbare Zeitabschnitt der Zeitabschnitt, in dem die exotherme Reaktion erwartet wird.

Der Partikelfilter weist eine gegenüber einem Rohrstück gleicher Länge und gleichen Querschnitts erheblich höhere Wärmekapazität auf. In einen kalten Partikelfilter eintretendes heißes Abgas gibt daher zunächst Wärme ab und verläßt gekühlt den Partikelfilter bis dieser ausreichend aufgeheizt ist und die Temperatur am Ausgang des Partikelfilters ansteigt. Ebenso wird in einen heißen Partikelfilter eintretendes kaltes Abgas zunächst Wärme aufnehmen und verläßt aufgeheizt den Partikelfilter bis dieser ausreichend abgekühlt ist und die Temperatur am Ausgang des Partikelfilters abfällt. Zur Überwachung eines Partikelfilters ist daher geeignet, dass auf einen korrekt eingebauten Partikelfilter geschlossen wird, wenn der zeitliche Verlauf der zweiten Abgastemperatur eine größere als eine erste vorgegebene zeitliche Verzögerung gegenüber dem zeitlichen Verlauf der ersten Abgastemperatur aufweist.

Besonders deutlich tritt der verzögernde Effekt des Partikelfilters bei einem Kaltstart der Brennkraftmaschine auf. Das erfindungsgemäße Verfahren ist daher dazu geeignet, dass auf einen korrekt eingebauten Partikelfilter geschlossen wird, wenn nach einem Kaltstart der Brennkraftmaschine der zeitliche Verlauf der zweiten Abgastemperatur eine größere als eine zweite vorgegebene zeitliche Verzögerung gegenüber dem zeitlichen Verlauf der ersten Abgastemperatur aufweist.

Die Wärmekapazität des Partikelfilters hat neben der verzögernden Wirkung auf den Temperaturverlauf auch noch die Wirkung einer Verminderung der Amplitude von Temperaturschwankungen. Diese Verminderung hängt von der Dauer der Schwankung ab. Erfindungsgemäß ist vorgesehen, dass auf einen korrekt eingebauten Partikelfilter geschlossen wird, wenn der zeitliche Verlauf der zweiten Abgastemperatur höchstens eine um einen vorgebbaren Faktor kleinere Amplitude als der zeitliche Verlauf der ersten Abgastemperatur aufweist. Wird der Partikelfilter ausgebaut, hat das Verbindungsrohr eine geringe thermische Masse und verkleinert die Amplitude von Temperaturschwankungen nur unwesentlich.

Die die Vorrichtung betreffende Aufgabe der Erfindung wird dadurch gelöst, dass im Abgaskanal nach dem Partikelfilter ein zweiter Temperatursensor angeordnet ist und dass in der Steuereinheit ein Schaltkreis oder ein Programmablauf zur Bestimmung einer ersten Abgastemperatur vor dem Partikelfilter und zur Erfassung einer zweiten Temperatur mittels des zweiten Temperatursensors sowie zur Überwachung des Partikelfilters mittels einer Bewertung von Höhe und/oder zeitlichem Verlauf der ersten und zweiten Abgastemperatur vorgesehen ist. Die Temperatur und deren Verlauf vor dem Partikelfilter kann mittels eines Modells aus den Betriebsparametern der Brennkraftmaschine oder mittels eines ersten Temperatursensors bestimmt werden. Die Temperatur und deren Verlauf nach dem Partikelfilter wird mittels eines zweiten Temperatursensors bestimmt. Dieser zweite Temperatursensor kann auch als Abgassensor mit Temperaturfunktion ausgebildet sein. Es kann beispielhaft eine Lambdasonde verwendet werden, deren Temperatur aus dem elektrischen Widerstand einer Heizung der Lambdasonde oder mit einem in der Lambdasonde integrierten Temperaturfühler bestimmt wird. Dieser Kombinationssensor kann bei einem Kaltstart vor einem Taupunktende zur Bestimmung der Temperatur und zur Diagnose des Partikelfilters verwendet werden und sobald Taupunktende erreicht ist als Lambdasonde verwendet werden.

Die Erfindung wird im Folgenden anhand eines in den Figuren dargestellten Ausführungsbeispiels näher erläutert. Es zeigen:
- Figur 1: das technische Umfeld, in dem die Erfindung verwendet werden kann,
- Figur 2: einen ersten zeitlichen Verlauf von Temperaturen im Abgaskanal einer Brennkraftmaschine,
- Figur 3: einen zweiten zeitlichen Verlauf von Temperaturen bei einem Kaltstart der Brennkraftmaschine,
- Figur 4: einen dritten zeitlichen Verlauf von Temperaturen im Abgaskanal der Brennkraftmaschine.

Figur 1 zeigt das technische Umfeld, in dem die Erfindung angewendet werden kann. Eine mit Benzin betriebene Brennkraftmaschine 10 wird über eine Luftzuführung 11 mit Verbrennungsluft versorgt und gibt Abgas über einen Abgaskanal 14 ab. In dem Abgaskanal 14 ist nach der Brennkraftmaschine 10 ein Dreiwegekatalysator 13 angeordnet, nach dem in Flussrichtung des Abgases ein Partikelfilter 16 angeordnet ist. Die Temperatur des Abgases wird vor dem Partikelfilter 16 mit einem ersten Temperatursensor 15 und nach dem Partikelfilter 16 mit einem zweiten Temperatursensor 17 bestimmt. Der erste Temperatursensor 15 und der zweite Temperatursensor 17 sind mit einer Steuereinheit 12 verbunden, in der ihre Signale ausgewertet werden um daraus ein Vorhandensein des Partikelfilters 16 und dessen Funktion zu überwachen. In einer anderen Ausführungsform kann die Temperatur des Abgases vor dem Partikelfilter 16 aus Betriebsparametern der Brennkraftmaschine 10 und einem zugehörigen Modell bestimmt werden; der erste Temperatursensor 15 kann dann entfallen.

Figur 2 zeigt in einem ersten Temperaturdiagramm 20 Temperaturverläufe bei einer Regeneration des Partikelfilters 16. Die Temperaturen sind entlang einer ersten Temperaturachse 21 und einer ersten Zeitachse 25 aufgetragen. Ein erster Temperaturverlauf 22 zeigt den zeitlichen Verlauf der Temperatur vor dem Partikelfilter 16. In einer ersten Phase 26 sammelt der Partikelfilter 16 Ruß-Partikel aus dem Abgas. Für eine Regeneration werden in einer zweiten Phase 27 die Abgastemperatur erhöhende Maßnahmen eingeleitet und es wird ein Sauerstoffüberschuss im Abgas eingestellt, so dass der erste Temperaturverlauf 22 ansteigt. In einer dritten Phase 28 wird die Abgastemperatur vor dem Partikelfilter 16 auf hohem Niveau von beispielhaft 600°C gehalten und der Partikelfilter regeneriert. Nach der dritten Phase 28 wird der Normalbetrieb wieder aufgenommen und der erste Temperaturverlauf 22 sinkt ab. Bei einem bestimmungsgemäß arbeitenden Partikelfilter 16 ergibt sich nach dem Partikelfilter 16 ein dritter Temperaturverlauf 24. In der ersten Phase 26 ist der dritte Temperaturverlauf 24 etwas niedriger als der erste Temperaturverlauf 22. In der zweiten Phase 27 steigt der dritte Temperaturverlauf 24 etwas verzögert nach dem ersten Temperaturverlauf 22 an. In der dritten Phase 28 wird in einer exothermen Reaktion Ruß im Partikelfilter 16 abgebrannt, so dass der dritte Temperaturverlauf 24 höher steigt als der erste Temperaturverlauf 22. Sind die im Partikelfilter 16 eingelagerten Ruß-Partikel abgebrannt, sinkt der dritte Temperaturverlauf 24 wieder ab. Diese vorübergehende Überhöhung des dritten Temperaturverlaufs 24 gegenüber dem ersten Temperaturverlauf 22 in der dritten Phase 28 wird als Anzeichen für einen korrekt arbeitenden Partikelfilter 16 in der Überwachung verwendet. Läuft die Regeneration nicht wie vorgesehen ab, ergibt sich nach dem Partikelfilter 16 ein zweiter Temperaturverlauf 23. In der zweiten Phase 27 steigen der zweite und dritte Temperaturverlauf 23, 24 gemeinsam an. In der dritten Phase 28 zeigt der zweite Temperaturverlauf 23 jedoch keine Überhöhung gegenüber dem ersten Temperaturverlauf 22. Die für eine Regeneration typische exotherme Reaktion findet demnach nicht statt.

Figur 3 zeigt in einem zweiten Temperaturdiagramm 30 Temperaturverläufe vor und nach dem Partikelfilter 16 nach einem Kaltstart der Brennkraftmaschine 10. Die Temperaturen sind entlang einer zweiten Temperaturachse 31 und einer zweiten Zeitachse 35 aufgetragen. Ein vierter Temperaturverlauf 32 zeigt den zeitlichen Verlauf der Temperatur vor dem Partikelfilter 16. Zunächst ist das Gasgemisch im Abgaskanal etwa auf Umgebungstemperatur. Mit dem Start der Brennkraftmaschine 10 steigt der vierte Temperaturverlauf 32 an und stellt sich nach Überschreitung eines Maximalwerts auf Betriebstemperatur ein. Ein sechster Temperaturverlauf 34 zeigt die Temperatur nach einem intakten Partikelfilter 16. Der sechste Temperaturverlauf 34 steigt erst nach einer durch die thermische Masse des Partikelfilters 16 bedingte Verzögerungsdauer 36 auf Betriebstemperatur an. Wird der Partikelfilter 16 aus dem Abgaskanal 14 entfernt, fehlt diese Verzögerungsdauer 36 und es stellt sich ein fünfter Temperaturverlauf 33 ein; dieser folgt mit nur geringer Verzögerung in Anstieg und Höhe dem vierten Temperaturverlauf 32. Dieses Verhalten beim Kaltstart ist für die Überwachung ein eindeutiges Anzeichen für das Vorliegen eines Fehlerzustands.

Figur 4 zeigt in einem dritten Temperaturdiagramm 40 Temperaturverläufe vor und nach dem Partikelfilter 16 bei wechselnden Betriebsbedingungen der Brennkraftmaschine 10. Durch die wechselnden Betriebsbedingungen zeigt ein siebter Temperaturverlauf 42 vor dem Partikelfilter 16 Temperaturschwankungen. Bei einem intakten und im Abgaskanal 14 vorhandenen Partikelfilter 16 folgt ein neunter Temperaturverlauf 44 nach dem Partikelfilter 16 mit einer charakteristischen Verzögerung und weist wegen der Wärmekapazität des Partikelfilters 16 eine geringere Amplitude der Temperaturschwankungen als der siebte Temperaturverlauf 42 vor dem Partikelfilter 16. Wird der Partikelfilter 16 aus dem Abgaskanal 14 entfernt, fehlt diese charakteristische Verzögerung und die Verminderung der Amplitude und es stellt sich ein achter Temperaturverlauf 43 ein; dieser folgt mit nur geringer Verzögerung in Anstieg und Höhe dem siebten Temperaturverlauf 42. Dieses Verhalten bei wechselnden Betriebsbedingungen der Brennkraftmaschine 10 ist für die Überwachung ein eindeutiges Anzeichen für das Vorliegen eines Fehlerzustands.

Insgesamt kann erfindungsgemäß durch eine Auswertung von Höhe und Verlauf der Temperaturen vor und nach dem Partikelfilter auf dessen korrekte Regeneration geschlossen werden. Weiterhin kann ein Ausbau eines Partikelfilters und sein Ersatz durch ein Verbindungsrohr erkannt werden.

## Patentansprüche

1. Verfahren zur Überwachung eines Partikelfilters (16) im Abgaskanal (14) einer mit Benzin betriebenen Brennkraftmaschine (10), wobei eine erste Abgastemperatur vor dem Partikelfilter (16) und eine zweite Abgastemperatur nach dem Partikelfilter (16) bestimmt werden und dass aus einer Differenz zwischen der ersten und der zweiten Abgastemperatur oder aus einem unterschiedlichen zeitlichen Verlauf der ersten und der zweiten Abgastemperatur eine Diagnose des Partikelfilters (16) ermöglicht wird, **dadurch gekennzeichnet, dass** die erste Abgastemperatur aus Betriebsparametern der Brennkraftmaschine (10) modelliert oder mittels eines ersten temperatursensors (15) bestimmt wird und dass die zweite Abgastemperatur mit einem zweiten Temperatursensor (17) oder einem Abgassensor mit Temperaturfunktion bestimmt wird, wobei ein Vorhandensein und/ oder eine korrekte Funktion des Partikelfilters (16) aufgrund von Auswirkungen der thermischen Masse des Partikelfilters (16) oder dessen Einfluss auf die Temperatur des Abgases beim Abbrand von im Partikelfilter (16) angelagerten Rußpartikeln detektiert werden.

2. Verfahren nach Anspruch 1, **dadurch gekennzeichnet, dass** während einer Regeneration des Partikelfilters (16) auf einen korrekt eingebauten und/oder funktionierenden Partikelfilter (16) geschlossen wird, wenn die erste Abgastemperatur in einem vorgebbaren Zeitabschnitt niedriger ist als die zweite Abgastemperatur.

3. Verfahren nach Anspruch 1, **dadurch gekennzeichnet, dass** auf einen korrekt eingebauten Partikelfilter (16) geschlossen wird, wenn der zeitliche Verlauf der zweiten Abgastemperatur eine größere als eine erste vorgegebene zeitliche Verzögerung gegenüber dem zeitlichen Verlauf der ersten Abgastemperatur aufweist.

4. Verfahren nach Anspruch 1 oder 3, **dadurch gekennzeichnet, dass** auf einen korrekt eingebauten Partikelfilter (16) geschlossen wird, wenn nach einem Kaltstart der Brennkraftmaschine (10) der zeitliche Verlauf der zweiten Abgastemperatur eine größere als eine zweite vorgegebene zeitliche Verzögerung gegenüber dem zeitlichen Verlauf der ersten Abgastemperatur aufweist.

5. Verfahren nach einem der Ansprüche 1, 3 oder 4, **dadurch gekennzeichnet, dass** auf einen korrekt eingebauten Partikelfilter (16) geschlossen wird, wenn der zeitliche Verlauf der zweiten Abgastemperatur höchstens eine um einen vorgebbaren Faktor kleinere Amplitude als der zeitliche Verlauf der ersten Abgastemperatur aufweist.

6. Vorrichtung zur Überwachung eines Partikelfilters (16) in einem Abgaskanal (14) einer mit Benzin betriebenen Brennkraftmaschine (10), wobei der Brennkraftmaschine (10) eine Steuereinheit (12) zugeordnet ist, wobei im Abgaskanal (14) nach dem Partikelfilter (16) ein zweiter Temperatursensor (17) angeordnet ist und dass in der Steuereinheit (12) ein Schaltkreis oder ein Programmablauf zur Bestimmung einer ersten Abgastemperatur vor dem Partikelfilter (16) und zur Erfassung einer zweiten Temperatur mittels des zweiten Temperatursensors (17) sowie zur Überwachung des Partikelfilters (16) mittels einer Bewertung von Höhe und/oder zeitlichem Verlauf der ersten und zweiten Abgastemperatur vorgesehen ist, **dadurch gekennzeichnet, dass** der Schaltkreis oder der Programmablauf zur Durchführung des Verfahrens nach Anspruch 1 bis 5 ausgebildet ist.

## Claims

1. Method for monitoring a particle filter (16) in the exhaust-gas duct (14) of an internal combustion engine (10) which is operated with petrol, wherein a first exhaust-gas temperature upstream of the particle filter (16) and a second exhaust-gas temperature downstream of the particle filter (16) are determined, and in that a diagnosis of the particle filter (16) is made possible from a difference between the first and the second exhaust-gas temperature or from a differing time profile of the first and the second exhaust-gas temperature, **characterized in that** the first exhaust-gas temperature is modelled from operating parameters of the internal combustion engine (10) or is determined by means of a first temperature sensor (15), and **in that** the second exhaust-gas temperature is determined by way of a second temperature sensor (17) or an exhaust-gas sensor which has a temperature function, wherein the presence and/or correct functioning of the particle filter (16) are detected on the basis of effects of the thermal mass of the particle filter (16) or its influence on the temperature of the exhaust gas when soot particles which have accumulated in the particle filter (16) are burned off.

2. Method according to Claim 1, **characterized in that**, during a regeneration of the particle filter (16), a correctly installed and/or functioning particle filter (16) is inferred if the first exhaust-gas temperature is lower than the second exhaust-gas temperature during a predefinable time period.

3. Method according to Claim 1, **characterized in that** a correctly installed particle filter (16) is inferred if the time profile of the second exhaust-gas temperature has, in relation to the time profile of the first exhaust-gas temperature, a time delay which is greater than a first predefined time delay.

4. Method according to Claim 1 or 3, **characterized in that** a correctly installed particle filter (16) is inferred if, following a cold start of the internal combustion engine (10), the time profile of the second exhaust-gas temperature has, in relation to the time profile of the first exhaust-gas temperature, a time delay which is greater than a second predefined time delay.

5. Method according to one of Claims 1, 3 or 4, **characterized in that** a correctly installed particle filter (16) is inferred if the time profile of the second exhaust-gas temperature has at most an amplitude which is smaller by a predefinable factor than the time profile of the first exhaust-gas temperature.

6. Device for monitoring a particle filter (16) in an exhaust-gas duct (14) of an internal combustion engine (10) which is operated with petrol, wherein the internal combustion engine (10) is assigned a control unit (12), wherein a second temperature sensor (17) is arranged in the exhaust-gas channel (14) downstream of the particle filter (16), and in that a circuit or a program sequence for determining a first exhaust-gas temperature upstream of the particle filter (16) and for detecting a second temperature by means of the second temperature sensor (17) and for monitoring the particle filter (16) by means of evaluation of the magnitude and/or time profile of the first and second exhaust-gas temperature is provided in the control unit (12), **characterized in that** the circuit or the program sequence is configured for carrying out the method according to Claims 1 to 5.

## Revendications

1. Procédé de surveillance d'un filtre (16) à particules disposé dans le canal (14) à gaz d'échappement d'un moteur (10) à combustion interne alimenté en essence, dans lequel une première température des gaz d'échappement est déterminée en amont du filtre (16) à particules et une deuxième température des gaz d'échappement en aval du filtre (16) à particules, et dans lequel un diagnostic du filtre (16) à particules est rendu possible à partir de la différence entre la première et la deuxième température des gaz d'échappement ou d'évolutions temporelles différentes de la première ou de la deuxième température des gaz d'échappement,
**caractérisé en ce que**
la première température des gaz d'échappement est modélisée à partir de paramètres de fonctionnement du moteur (10) à combustion interne ou est déterminée au moyen d'un premier capteur de température (15),
**en ce que** la deuxième température des gaz d'échappement est déterminée à l'aide d'un deuxième capteur de température (17) ou d'un capteur des gaz d'échappement doté d'une fonction de température,
**en ce que** la présence et/ou le fonctionnement correct du filtre (16) à particules sont détectés sur la base d'effet de la masse thermique du filtre (16) à particules ou de son influence sur la température des gaz d'échappement lors de la combustion de particules de suie qui se sont accumulées dans le filtre (16) à particules.

2. Procédé selon la revendication 1, **caractérisé en ce que** pendant la régénération du filtre (16) à particules, on conclut que le filtre (16) à particules est monté et/ou fonctionne correctement si la première température des gaz d'échappement est plus basse que la deuxième température des gaz d'échappement pendant un intervalle de temps prédéterminé.

3. Procédé selon la revendication 1, **caractérisé en ce que** l'on conclut que le filtre (16) à particules est monté correctement si l'évolution temporelle de la deuxième température des gaz d'échappement présente un ralentissement plus grand qu'un premier ralentissement prédéterminé de l'évolution temporelle de la première température des gaz d'échappement.

4. Procédé selon les revendications 1 ou 3, **caractérisé en ce que** l'on conclut que le filtre (16) à particules est monté correctement si après un démarrage à froid du moteur (10) à combustion interne, l'évolution temporelle de la deuxième température des gaz d'échappement présente un ralentissement plus grand qu'un deuxième ralentissement prédéterminé de l'évolution temporelle de la première température des gaz d'échappement.

5. Procédé selon l'une des revendications 1, 3 ou 4, **caractérisé en ce que** l'on conclut que le filtre (16) à particules est monté correctement si l'évolution temporelle de la deuxième température des gaz d'échappement présente au plus une amplitude plus petite d'un facteur prédéterminé que l'évolution temporelle de la première température des gaz d'échappement.

6. Ensemble de surveillance d'un filtre (16) à particules disposé dans le canal (14) à gaz d'échappement d'un moteur (10) à combustion interne alimenté en essence, une unité de commande (12) étant associée au moteur (10) à combustion interne, un deuxième capteur de température (17) étant disposé dans le canal (14) à gaz d'échappement en aval du filtre (16) à particules, un circuit de commande ou le déroulement d'un programme étant prévu dans l'unité de commande (12) pour déterminer une première température des gaz d'échappement en amont du filtre (16) à particules et pour saisir une deuxième température au moyen du deuxième capteur de température (17), ainsi que pour surveiller le filtre (16) à particules au moyen de l'évaluation du niveau et/ou de l'évolution temporelle de la première et de la deuxième température des gaz d'échappement,
**caractérisé en ce que**
le circuit de commande ou le déroulement du programme sont configurés pour permettre la mise en oeuvre du procédé selon les revendications 1 à 5.
